# EUROPEAN PATENT APPLICATION

(11) **EP 3 264 410 A1**
(43) Date of publication of application: **03.01.2018**
(21) Application number: 16755484.9
(22) Date of filing: 23.02.2016
(51) Int. Cl.: G10K 11/16, E04B 1/86

(54) **ACOUSTIC STRUCTURE**

(30) Priority: 27.02.2015 JP 2015038835; 27.02.2015 JP 2015038836; 27.02.2015 JP 2015038837
(71) Applicant: Yamaha Corporation, Hamamatsu-shi, Shizuoka 430-8650 (JP)
(72) Inventor: HONJI, Yoshikazu, Hamamatsu-shi Shizuoka 430-8650 (JP); CLERC, Bertrand, Hamamatsu-shi Shizuoka 430-8650 (JP)
(74) Representative: Hoffmann Eitle
(86) International application number: PCT/JP2016/055263
(87) International publication number: WO 2016/136740

(57) **Abstract**

An acoustic structure (1) includes: at least one hollow section (2) defined by a pair of opposed transparent or translucent wall members (11) and a plurality of connecting wall members (12, 13) interconnecting the pair of wall members, and at least one opening portion (3) communicating an interior space inside the hollow section to an exterior space. At least some of the connecting wall members (12, 13) may have colorless or colored transparency or translucence. Further, a mirror surface may be provided on any desired portion of the wall members defining the hollow section. Furthermore, a lighting device may be disposed near the outside or inside of the hollow section. Because light or a scene on the opposite side of the acoustic structure is visible through the transparent or translucent wall member, design quality and usability of the acoustic structure can be enhanced.

## Description

### Technical Field:

The present invention relates generally to acoustic structures.

### Background Art:

In rooms surrounded by walls, such as music halls, theaters and conference rooms, acoustic problems, such as booming and flutter echo, can sometimes occur due to sound repeatedly reflecting between parallel opposed wall surfaces. Patent Literature 1 identified below discloses an acoustic structure where a plurality of pipes each having a rectangular cross-sectional shape are arranged and an opening portion is formed in a side surface of each of such pipes in order to prevent the aforementioned acoustic problems.

### Prior Art Literature:

### Patent Literature:

Patent Literature 1: Japanese Patent Application Laid-open Publication No. 2010-084509

In the conventionally-known acoustic structure, wall members defining a hollow section that functions to produce an acoustic effect are each formed of an opaque material, such as wood or synthetic resin. Where the acoustic structure is installed in a room, a user may feel that the interior space of the room is narrow and some people may be given a cooped-up (or confined) feeling because the acoustic structure is considerably bulky, so that some people may be given a cooped-up feeling and thus the acoustic structure may not be capable of imparting a comfortable usability to the user. Namely, the conventionally-known acoustic structure is not designed in such a manner that, where it is installed in a room, it can impart a user (i.e., a person present in the room) with a comfortable usability.

### Summary of Invention:

In view of the foregoing prior art problems, it is an object of the present invention to provide an acoustic structure capable of achieving an enhanced usability.

In order to accomplish the aforementioned object, the present invention provides an improved acoustic structure, which comprises: at least one hollow section defined by a pair of transparent or translucent wall members disposed in opposed relation to each other and a plurality of connecting wall members interconnecting the pair of wall members; and an opening portion that communicates an interior space of the hollow section to an exterior space.

According to the present invention, of the wall members defining the hollow section that functions to produce an acoustic effect, the wall members disposed in opposed relation to each other is formed of a transparent or translucent material to provide a pair of transparent or translucent wall members, so that light can be directed from the back side of the acoustic structure, through the pair of transparent or translucent wall members, to the front side of the acoustic structure. Thus, in the case where the acoustic structure is installed in a room, the present invention can prevent a user from feeling that the interior space of the room is narrow due to the installed acoustic structure. Namely, the present invention can effectively reduce a cooped-up feeling of the interior space of the room where the acoustic structure is installed. Further, because light or a scene on the back side of the installed acoustic structure can be viewed from the front side of the acoustic structure, the user can feel an increased spatial extent, so that enhanced usability of the acoustic structure can be achieved. As a result, the acoustic structure of the present invention can have an enhanced outer appearance and aesthetic design.

In one embodiment of the present invention, at least part of the plurality of connecting wall members may be constructed to have a mirror surface. Thus, the user present on the front side of the acoustic structure can view not only light or a scene seen through the pair of transparent or translucent wall members but also light or a scene reflected from the mirror surface. In this manner, the user can feel a further increased spatial extent, so that even further enhanced usability of the acoustic structure can be achieved. As a result, the acoustic structure of the present invention can have an even further enhanced outer appearance and aesthetic design.

According to another aspect of the present invention, there is provided an improved acoustic structure, which comprises: at least one hollow section defined by a pair of transparent or translucent wall members disposed in opposed relation to each other and a plurality of connecting wall members interconnecting the pair of wall members; an opening portion that communicates an interior space of the hollow section to an exterior space; and mirror surfaces provided on such portions, inside and outside of wall surfaces defining the hollow section, that linear viewing through the pair of wall members is not prevented. Thus, in this case too, the user present on the front side of the acoustic structure can view not only light or a scene seen through the pair of transparent or translucent wall members but also light or a scene reflected from the mirror surface. In this way, the user can feel an even further increased spatial extent, so that even further enhanced usability of the acoustic structure can be achieved. As a result, the acoustic structure of the present invention can have an even further enhanced outer appearance and aesthetic design.

In one embodiment of the present invention, the acoustic structure may further comprise a lighting device disposed near the outside or the inside of the hollow section. Because the transparent or translucent wall members defining the hollow section are illuminated with the light emitted from the lighting device, the outer appearance and aesthetic design of the acoustic structure of the present invention can be enhanced even further.

### Brief Description of Drawings:

Fig. 1 is a front view showing an acoustic structure according to an embodiment of the present invention.
Fig. 2 is a sectional view taken along the A - A line of Fig. 1.
Fig. 3 is a sectional view, similar to Fig. 2, showing a modification of the acoustic structure of Fig. 1.
Fig. 4 is a sectional view, also similar to Fig. 2, showing a modification of the acoustic structure of Fig. 1.
Fig. 5 is a sectional view, also similar to Fig. 2, showing still another modification of the acoustic structure of Fig. 1.
Fig. 6 is a front view showing an acoustic structure provided with mirror surface layers according to an embodiment of the present invention.
Fig. 7 is a sectional view taken along the B - B line of Fig. 6.
Fig. 8 is a sectional view, similar to Fig. 7, showing a modification of the acoustic structure of Fig. 6.
Fig. 9 is a sectional view, also similar to Fig. 7, showing another modification of the acoustic structure of Fig. 6.
Fig. 10 is a sectional view, also similar to Fig. 7, showing still another modification of the acoustic structure of Fig. 6.
Fig. 11 is a front view showing an acoustic structure provided with a lighting device according to an embodiment of the present invention;
Fig. 12 is a sectional view taken along the C - C line of Fig. 11.
Fig. 13 is a modification of the acoustic structure shown in Fig. 11, of which (a) is a fragmentary enlarged sectional view of the modification of the acoustic structure and (b) is an enlarged sectional view showing principal parts of the modification of the acoustic structure shown in (a) of Fig. 13.
Fig. 14 is another modification of the acoustic structure shown in Fig. 11, of which (a) is a fragmentary enlarged sectional view of the modification of the acoustic structure and (b) is an enlarged sectional view showing principal parts of the modification shown in (a) of Fig. 14.
Fig. 15 is a fragmentary enlarged sectional view of still another modification of the acoustic structure shown in Fig. 11.

### Description of Embodiments:

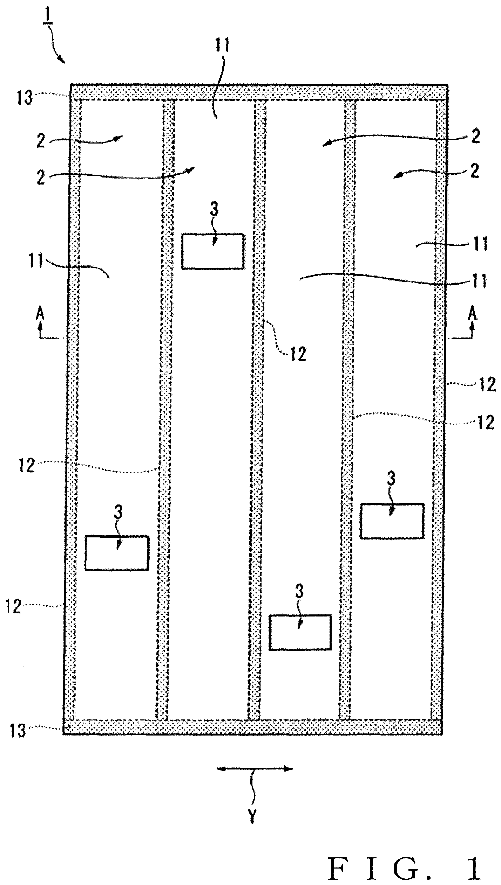

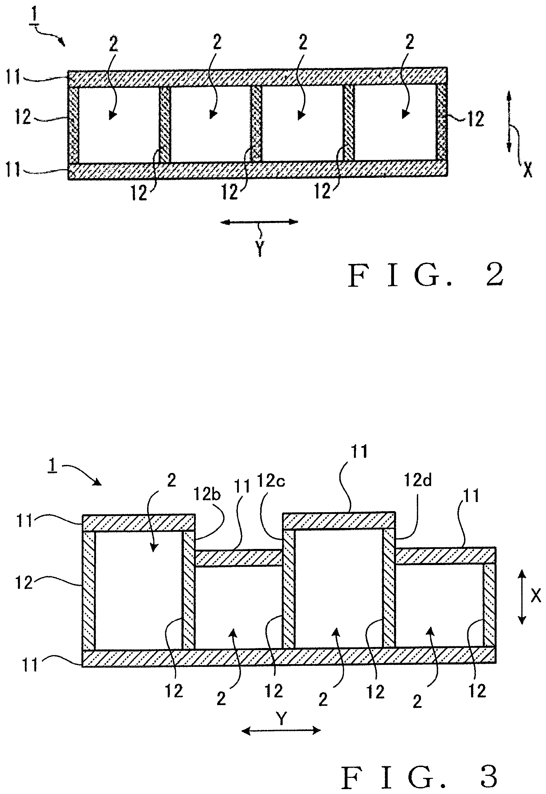

First of all, a description will be given about an embodiment of the present invention with reference to Figs. 1 and 2. As shown in Figs. 1 and 2, an acoustic structure according to the embodiment includes a plurality of (four in the illustrated example) hollow sections 2 sequentially arranged parallel in a Y direction. Each of the hollow sections 2 is defined by a pair of transparent or translucent wall members 11 opposed to each other in an X direction and a plurality of connecting wall members 12 and 13 interconnecting the pair of wall members 11, and each of the hollow sections has a vertically elongated shape in the illustrated example. More specifically, front and back surface walls of the hollow section 2 are formed by the pair of transparent or translucent wall members 11, left and right side surface walls of the hollow section 2 are formed by a pair of left and right connecting wall members (also referred to as "side surface members") 12, and upper and lower (or bottom) surface walls of the hollow section 2 are formed by a pair of upper and lower connecting wall members (also referred to as "end surface members") 13. In the illustrated example, where the hollow sections 2 are formed integrally, the side surface members 12 are shared between adjoining ones of the hollow sections 2, the wall member 11 constituting the front surface walls of the individual hollow sections 2 is a single large common panel, and the wall member 11 constituting the back surface walls of the individual hollow sections 2 is also a single large common panel. Further, the end surface member 13 constituting the upper surface walls of the individual hollow sections 2 is also a single plate member, and the end surface member 13 constituting the bottom surface walls of the individual hollow sections 2 is also a single common plate member.

Further, in each of the hollow sections 2, at least one opening portion 3 is formed or provided in a given region of any one of the wall surfaces defining the hollow section 2. In the illustrated example, one such opening portion 3 is provided in the wall member 11 constituting the front surface wall of the hollow section 2, so that an exterior space outside of the acoustic structure 1 is communicated with an interior space of the hollow section 2 via the opening portion 3. In this manner, the construction pertaining to each of the hollow sections 2 constitutes one Helmholtz resonator by means of the interior space of the hollow section 2 and a neck space intercommunicating the interior and exterior spaces via the opening portion 3, thereby contributing to sound scattering and absorbing effects in an interior space of a room where the acoustic structure 1 is installed. As known in the art, the number of the opening portion 3 to be provided in association with each of the hollow sections 2 is not limited to just one and may be two or more. Further, the shape and size of the opening portion 3 is not limited to those of the illustrated example and may be modified as appropriate. For example, the opening portion 3 may be formed as a neck projecting outward beyond the outer surface of the wall member 11. Furthermore, the opening portion 3 may comprise a single opening hole as shown in Fig. 1 or a group of a plurality of small-diameter opening holes arranged close to each other in a predetermined region. In the latter case, it is only necessary that the group of opening holes constituting the opening portion 3 be provided in such a manner that the total area of the opening holes equals the area of the aforementioned single opening hole constituting the opening portion 3.

The pair of wall members 11 constituting the front and back surface walls of the hollow section 2 is formed of a transparent material, such as glass or acrylic resin. As an example, the pair of wall members 11 is formed in its entirety of a colorless transparent material. As another example, the pair of wall members 11 may be formed in part of a colorless transparent material. As still another example, the pair of wall members 11 may be formed of an appropriately colored transparent material.

It suffices that the pair of wall members 11 be formed in such a manner that a scene or situations on the back side of the acoustic structure 1 can be viewed through the pair of wall members 11 at least from the front side of the acoustic structure 1. Thus, a plurality of minute reflecting elements (not shown) may be provided dispersedly inside or on the surfaces of the wall members 11 only to the extent that viewing of the scene or situations on the back side of the acoustic structure 1 through the wall members 11 is not disturbed. The minute reflecting members may each be formed in any desired outer shape, such as a grain or foil shape. As another example, the pair of wall members 11 may be formed of a translucent material and colored appropriately in such a manner as to permit passage or transmission therethrough of desired light. In short, it just suffices that at least part of the pair of wall members 11 is configured to have colorless or colored transparency or translucence.

Note that the above-mentioned X direction is a direction substantially perpendicularly intersecting the above-mentioned Y direction. Namely, the direction in which the wall members 11 are opposed to each other with each of the hollow sections 2 interposed therebetween is substantially perpendicular to the parallel arranged direction Y of the hollow sections 2. Thus, the transparent or translucent wall members 11 are opposed to each other in such a direction that the parallel arranged hollow sections 2 do not overlap one another, so that the acoustic structure 1 including the plurality of hollow sections 2, as a whole, can be readily seen through via the transparent or translucent wall members 11.

Further, the pair of side surface members (connecting wall members) 12 constituting the left and right side surface walls of the hollow section 2 may be formed, for example, of a colored transparent material, such as colored glass or acrylic resin, as shown in Fig. 2, or a translucent material that permits passage or transmission therethrough of light but cannot be seen through. In this case, the above-mentioned colored transparent material forming the pair of side surface members 12 may be of any desired color tone rather than limited to a particular color tone. The above-mentioned translucent material is a material that reflects light on its surface or in its interior without allowing the light to linearly pass therethrough. The above-mentioned translucent members may be of any desired specific construction; for example, the translucent members may be constructed by forming minute scratches in the surface of glass or acrylic resin, or by providing minute irregularly-light-reflecting elements within or on the surface of glass or acrylic resin. Further, a plurality of minute reflecting elements may be provided dispersedly inside or on the surfaces of the side surface members 12 in a similar manner to the aforementioned. The pair of side surface members 12 may be transparent or translucent in its entirety or part. As another example, the pair of side surface members (connecting wall members) 12 constituting the left and right side surface walls of the hollow section 2 may be formed of an opaque material that does not at all permit passage therethrough of light.

Further, in the instant embodiment, the pair of end surface members (connecting members) 13 may be formed in its entirety or in part of a colored transparent material or a translucent material, similarly to the aforementioned pair of side surface members 12. Furthermore, a plurality of minute reflecting elements may be provided dispersedly inside or on the surfaces of the end surface members 13, similarly to the aforementioned. As another example, the pair of end surface members 13 may be formed of an opaque material that does not at all permit passage therethrough of light.

Although the connecting wall members 12 and the connecting wall members 13 may be formed of a colored transparent material or a translucent material, the connecting wall members 12 or the connecting wall members 13 may be formed of a colored transparent material with the other connecting walls 13 or 12 formed of a translucent material. Further, in the case where the connecting wall members 12 and 13 are formed of a colored transparent material, they may be either identical to each other in color tone or different from each other in color tone. Thus, in a possible specific working example of the present invention, all the wall surfaces, rather than only the pair of wall members 11, may be formed of a colorless or colored transparent or translucent material.

In the instant embodiment, each of the hollow sections 2 is formed in a cylindrical shape having a rectangular cross-sectional shape, and thus, the pair of wall members 11 and the pair of side surface members 12 constituting the wall surfaces of the hollow section 2 are each formed in a flat plate shape. However, the present invention is not so limited, and the pair of wall members 11 and/or the pair of side surface members 12 (and the end surface members 13 as necessary) may be formed present appropriately curved surface shapes so that a curved interior space (or near-circular cylindrical interior space) is formed within the hollow section 2. As another example, in at least one of the hollow sections 2, the two wall members 11 may be opposed to each other in a non-parallel fashion although they are each formed in a flat plate shape.

Further, in the illustrated example, the two wall members 11 are each constructed using a common panel shared among the plurality of hollow sections 2 and each extend substantially flush (in generally the same plane) between and over adjoining ones of the hollow sections 2. In this way, each of the wall members 11 can be advantageously constructed with ease using a common panel shared among the plurality of hollow sections 2. However, the present invention is not so limited, and at least one of the wall members 11 may be constructed to extend substantially flush between and over at least two adjoining ones of the hollow sections 2. Alternatively, one surface of at least one of the two wall members 11 may be formed to have a stepped part, consisting of steps (level difference), between at least two adjoining ones of the hollow sections 2.

Fig. 3 is a sectional view showing a modification of the acoustic structure which is constructed to define a stepped part, consisting of steps, between at least two adjoining ones of the hollow sections 2. With such a stepped part, it is possible to construct the acoustic structure 1 such that the adjoining hollow sections 2 differ from each other in depth as appropriate. In this case, at least portions 12b, 12c and 12d of the side surface member (connecting wall member) 12 interconnecting steps of the two adjoining hollow sections 2 may have colorless or colored transparency or translucence. Because the portions 12b, 12c and 12d of the side surface member (connecting wall member) 12 projecting outward to define the stepped part have colorless or colored transparency or translucence similarly to the pair of wall members 11, the acoustic structure 1 including the plurality of hollow sections 2 can, as a whole, achieve an even further enhanced see-through capability in a direction from the back surface or the vicinity of the back surface to the front surface, despite such a modified construction.

Further, the pair of wall members 11 and the pair of side surface members 12, defining the wall surfaces of each of the hollow sections 2, are formed separately from each other and then fixed to each other in the instant embodiment, although they may be integrally formed together, for example, of synthetic resin. Further, the pair of wall members 11 and the pair of side surface members 12 are fixed to each other by an adhesive in the instant embodiment, although they may be fixed to each other by screws or the like. It is preferable that the adhesive to be used for fixing the pair of wall members 11 and the pair of side surface members 12 to each other have light permeability. For example, the adhesive may be conventionally-known synthetic resin or a solvent that temporarily dissolves the transparent material forming the hollow section 2.

In the case where the pair of wall members 11 and the pair of side surface members 12 are to be fixed to each other by an adhesive, relative positions among the four members may be chosen as desired. For example, the pair of side surface members 12 is positioned between the wall members 11 spaced from each other in the plate thickness direction (X direction) in the instant embodiment (see Fig. 2), although the pair of wall members 11 may be positioned between the side surface members 12 spaced from each other in the plate thickness direction (Y direction). Further, in the instant embodiment, each of the end surface members 13 is positioned between the wall members 11 similarly to the side surface members 12.

Further, the instant embodiment of the acoustic structure 1 includes the plurality of hollow sections 2, as set forth above. The hollow sections 2 are identical to one another in length and thickness in the instant embodiment, although they may differ from one another in length and thickness. Furthermore, in the instant embodiment, the opening portions 3 are formed in positions differing among the hollow sections 2 with respect to the longitudinal direction of the hollow sections 2. In the instant embodiment, the hollow sections 2 are arranged in the Y direction with no gap therebetween. In this manner, the acoustic structure 1 is formed in a panel shape with its dimension in the X direction constituting the thickness of the panel. The hollow sections 2 are formed integrally in the instant embodiment, although they may be formed separately and then fixed to one another. Needless to say, the acoustic structure 1 may include only one hollow section 2.

The acoustic structure 1 constructed in the aforementioned manner may, for example, incorporated in a wall of a room, although it may be simply installed in a room. Further, the acoustic structure 1 may, for example, constitute a partitioning plate that partitions a room into a plurality of spaces. Furthermore, the acoustic structure 1 may, for example, be installed near a window or may, for example, constitute a window.

According to the instant embodiment of the acoustic structure 1, as set forth above, light can be directed from the opposite side (back side) of the acoustic structure 1, through the pair of transparent or translucent wall members 11, to the front side of the acoustic structure 1. In this way, it is possible to prevent the interior space of the room from being felt to be small even where the acoustic structure 1 is installed in the room; that is, it is possible to minimize a cooped-up (or confined) feeling that would be given by the interior space of the room where the acoustic structure 1 is installed. As a result, it is possible to achieve an enhanced outer appearance and aesthetic design of the acoustic structure 1.

Further, according to the instant embodiment of the acoustic structure 1, a scene or situations on the opposite side (back side) can be viewed, or light on the opposite side (back side) can be felt, from the front side through the transparent or translucent wall members 11 constituting the front and back surface walls of the acoustic structure 1. Furthermore, in the case where the wall members 11 constituting the front and back surface walls of the acoustic structure 1 are made colorless transparent and the connecting wall members 12 and 13 are made colored transparent or translucent as noted above, boundaries between the wall members 11 and the connecting wall members 12 and 13 can be made unnoticeable. Such boundaries are adhesively attached parts between the wall members 11 and the connecting wall members 12 and 13 which are visible from the outside through the front wall member 11, but even where the adhesively attached parts have air bubbles mixed therein, these air bubbles would be made unnoticeable. As a result, the acoustic structure 1 can have an even further enhanced outer appearance and aesthetic design.

Whereas one embodiment of the present invention has been described above in detail, it should be appreciated that the present invention is not limited to the above-described embodiment and may be modified variously without departing from the basic principles and sprit of the present invention.

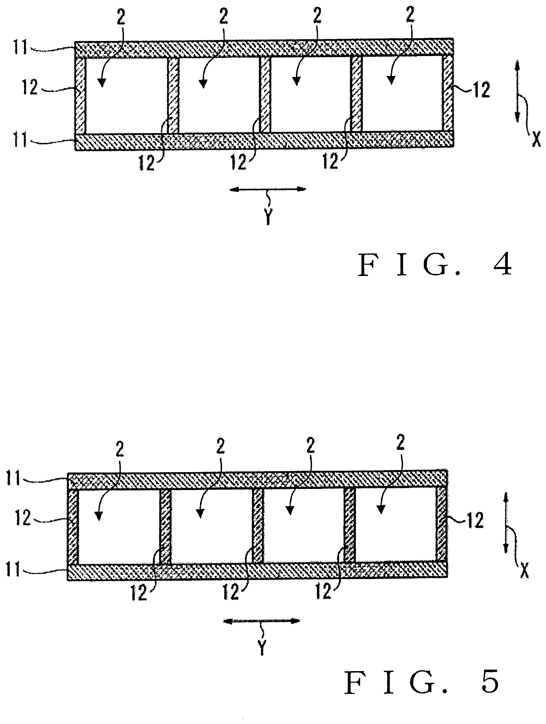

For example, the pair of wall members 11 constituting the front and back surface walls may be formed of a colored transparent material as shown, for example, in Figs. 4 and 5. In such a case, the left and right side surface members 12 may be formed as colorless transparent members as shown, for example, in Fig. 4, as translucent members as shown, for example, in Fig. 5, or as colored transparent members. Further, the upper and lower end surface members 13 may be formed as colorless transparent members, translucent members or colored transparent members, similarly to the left and right side surface members 12. Such modified arrangements too achieve the same advantageous benefits as the above-described embodiment.

In the above-described construction, the color tone of the colored transparent material forming the pair of wall members 11 that constitutes the front and back surface walls may be of such a degree that a scene or situations on the back side of the pipe 2 can be viewed from the front side of the acoustic structure 1 through a pair of first wall portions 6A. Further, in the case where the pair of wall members 11 constituting the front and back surface walls and the left and right side surface members 12 are each formed of a colored transparent material, these members 11 and 12 may be the same or different from each other in color tone.

Further, in all of the specific working examples described in this specification, the acoustic structure 1 may be modified in such a manner that the color tone of the colored transparent material forming the pair of wall members 11 and/or the connecting wall members 12 and 13 gradually varies, for example, in the longitudinal or transverse direction of the hollow sections 2. Namely, the colored transparent material may be constructed to have a color tone gradation. As another modification, the acoustic structure 1 may be constructed in such a manner that the transparent or translucent color tone of the pair of wall members 11 gradually varies among the hollow sections 2 sequentially arranged in the transverse direction (Y direction). In these cases, the acoustic structure 1 can have an even further enhanced outer appearance and aesthetic design. Further, the translucent material forming the pair of wall members 11 and/or the connecting wall members 12 and 13 may have a color tone gradation similarly to the aforementioned colored transparent members. Note that the aforementioned feature that the color tone differs or varies not only means that generally the same hue differs or vary in lightness (light-and-dark or light-and-shade intensity), but also means that the hue itself differs or varies.

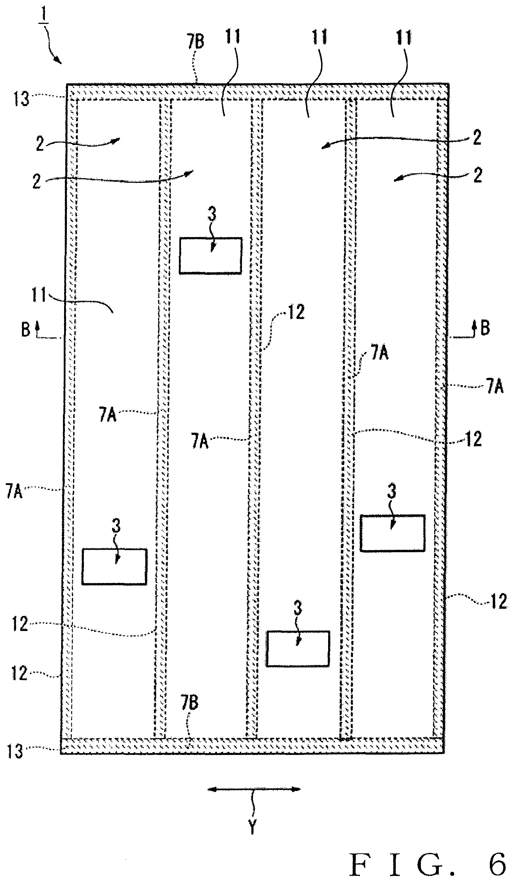

Next, with reference to Figs. 6 to 10, a description will be given about several specific working examples of the acoustic structure 1 provided with mirror surface layers. In Figs. 6 to 10, the same reference numerals as in Figs. 1 to 5 indicate the same constituent elements as in Figs. 1 to 5, and these same constituent elements will not be described in detail here to avoid unnecessary duplication.

In Fig. 6, connected ends of the connecting wall members 12 and 13 to the wall member 11 in the form of a single transparent panel located frontmost are visible through such a frontmost transparent wall member 11, and mirror surfaces 7A and 7B are provided on the above-mentioned connected ends of the connecting wall members 12 and 13.

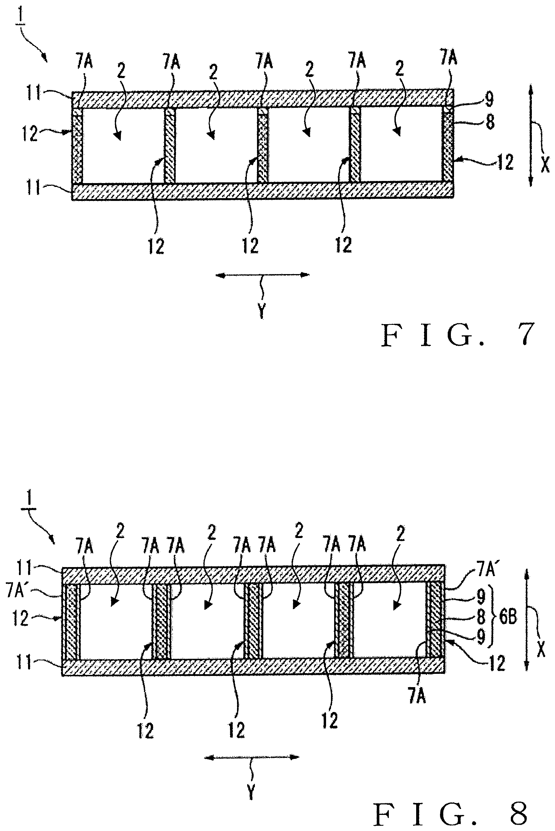

The following paragraphs first describe the mirror surfaces 7A on the connecting wall members (side surface members) 12. As shown in Fig. 7, the mirror surface 7A on each of the side surface members 12 is the surface of a mirror surface layer 9 provided on a part of the surface of a base portion 8 defining the shape of the side surface member 12. Namely, each of the side surface members 12 includes the base portion 8 and the mirror surface layer 9. The base portion 8 in the instant embodiment is formed of a transparent material, such as glass or acrylic resin, similarly to the wall member 11, although it may be formed, for example, of an opaque material that does not permit passage therethrough of light or a translucent material that permits passage therethrough of light but cannot be seen through. The mirror surface layer 9 may be formed, for example, by depositing metal on the surface of the base portion 8 or may be in the form of a member (e.g., a metal film member or a sheet member having metal deposited on a base sheet of paper or the like) attached to the surface of the base portion 8. In the instant embodiment, the mirror surface layer 9 is provided on the surface of the base portion 8 facing in the X direction, and more specifically on the surface of the base portion 8 perpendicularly intersecting the X direction. Namely, in the instant embodiment, the mirror surface 7A of the side surface member 12 perpendicularly intersects the X direction. In Fig. 7, the mirror surface 7A is provided only on each of the connected ends of the side surface member 12 attached to the one wall member 11 (constituting the front surface wall). However, the present invention is not so limited, and the mirror surface 7A may also be provided on each of the connected ends of the side surface member 12 attached to the other wall member 11 (constituting the back surface wall).

Next, the following describe the mirror surfaces 7B on the connecting wall members (end surface members) 13. As shown in Fig. 6, the mirror surface 7B is provided on each of the connected ends of the upper and lower end surface members 13 to the front wall members 11. Namely, like the aforementioned side surface members 12, the end surface members 13 in the instant embodiment each include a base portion (not shown) defining the shape of the end surface member 13 and a mirror surface layer (not shown) provided on a part of the surface of the base portion, and the mirror surface layer constitutes the mirror surface 7B. The base portion of the end surface member 13 is formed, for example, of a transparent material, such as glass or acrylic resin, in the instant embodiment, although it may be formed of an opaque or translucent material. Further, in the instant embodiment, the mirror surface 7B of the end surface member 13 faces in the same direction as the mirror surface 7A of the side surface member 12, i.e. perpendicularly intersects the X direction.

The acoustic structure 1 shown in Figs. 6 and 7, where the pair of wall members 11 etc. are transparent or translucent, allows a scene or situations on the opposite side (back side) to be viewed through such transparent or translucent portions, similarly to the aforementioned. In addition, because the mirror surfaces 7A and 7B are provided on portions of the surfaces of the connecting wall members (side surface members 12 and end surface members 13), scenes and situations around the acoustic structure 1 reflected on the mirror surfaces 7A and 7B can be viewed as necessary. Namely, because both a scene and situations on the opposite side of the acoustic structure 1 and scenes and situations reflected on the mirror surfaces 7A and 7B can be viewed, the acoustic structure 1 can have an even further enhanced outer appearance and aesthetic design. Besides, because both a scene and situations on the opposite side of the acoustic structure 1 and scenes and situations reflected on the mirror surfaces 7A and 7B can be viewed, it is possible to minimize a cooped-up (or confined) feeling of the interior space of the room where the acoustic structure 1 is installed.

Furthermore, in the instant embodiment of the acoustic structure 1, the mirror surfaces 7A and 7B are provided on the connected parts of the individual connecting wall members (side surface members 12 and end surface members 13) to the pair of transparent or translucent wall members 11. In this case, the transparency of the wall members 11 allows such connected parts (adhesively attached parts) of the individual connecting wall members to be viewed from the outside through the transparent wall members 11. However, even where the adhesively attached parts have air bubbles mixed therein, the mirror surfaces 7A and 7B can make these air bubbles unnoticeable. As a result, the acoustic structure 1 can have an even further enhanced outer appearance and aesthetic design.

The parts on which the mirror surfaces are provided are not limited to the above-mentioned and may be modified as desired. For example, on the left and right side surface members 12, the mirror surfaces 7A may be provided on the surfaces facing the interior spaces of the hollow sections 2, as shown in Fig. 8. Further, mirror surfaces 7A' may be provided on respective one outer surfaces of the outermost side surface members 12 constituting the outer surface of the acoustic structure 1, as shown in Fig. 8. Further, although not particularly shown, the mirror surfaces 7B too may be provided on the surfaces of the end surface members 13 facing the interior spaces of the hollow sections 2 in a similar manner to the above-mentioned. Also, the mirror surfaces 7B may also be provided on the respective outer surfaces of the end surface members 13 constituting the outer surface of the acoustic structure 1. Even with such arrangements, the acoustic structure 1 achieves the same advantageous benefits as the embodiment of Figs. 6 and 7.

Further, in the case where the acoustic structure 1 illustratively shown in Fig. 8 is installed near a window or constitutes a window, light (external light), such as sunlight, coming in from outside of the room, can be directed into the room after being reflected from the mirror surfaces 7A of the side surface members 12. In this way, a wider area of the interior of the room (e.g., the entire interior of the room) can be illuminated more lightly by the external light.

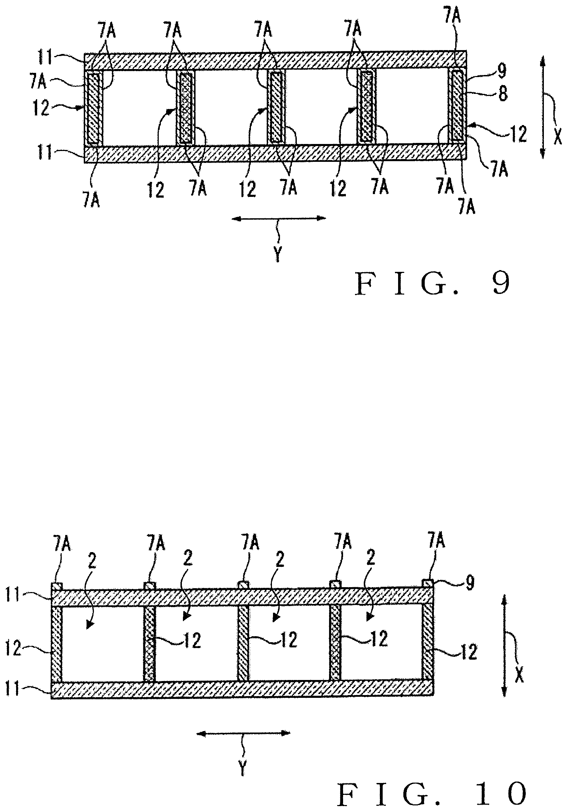

Further, the mirror surface 7A may be formed on the entire surface of the side surface member 12 as shown in Fig. 9, rather than on only a particular part of the surface of the side surface member 12. Furthermore, the mirror surface 7B too may be formed on the entire surface of the end surface member 13, rather than on only a particular part of the surface of the end surface member 13, although not particularly shown in the drawings.

As another alternative, the mirror surface 7A may be provide on a portion of the outer surface of the transparent or translucent wall member 11 that overlaps the side surface member 12 in the X direction as shown in Fig. 10, rather than provided directly on the surface of the side surface member 12. Further, although not particularly shown in the drawings, the mirror surface 7B too may be provide on a portion of the outer surface of the transparent or translucent wall member 11 that overlaps the end surface member 13 in the X direction. In short, the mirror surfaces 7A and 7B may be formed or provided, outside of wall surfaces of the hollow section 2 defined by the pair of wall members 11, that overlap the respective disposed positions of the connecting wall members 12 and 13 interconnecting the pair of wall members 11.

Such arrangements too achieve the same advantageous benefits as the above-described embodiment of Figs. 6 and 7. Further, the connected parts (adhesively attached parts) of the connecting wall members 12 and 13 to the wall members 11 are covered with the mirror surfaces 7A and 7B from outside as set forth above, and thus, even if the outer appearance and aesthetic design of the connected parts (adhesively attached parts) is adversely influenced, for example, due to mixing of air bubbles in the connected parts (adhesively attached parts), the connected parts (adhesively attached parts) can be prevented by the mirror surfaces from being viewed from outside, with the result that the acoustic structure 1 can have an even further enhanced outer appearance and aesthetic design.

Now, summarizing the embodiments illustratively shown in Figs. 6 to 10, the acoustic structure 1 includes: at least one hollow section 2 defined by a pair of opposed transparent or translucent wall members 11 and a plurality of connecting wall members 12 and 13 interconnecting the pair of opposed wall members 11; an opening portion 2 communicating the interior space of the hollow section 2 with the exterior space; and mirror surfaces 7A and 7B provided on such portions, inside and outside of the wall surfaces constituting the hollow section 2, that linear viewing through the pair of opposed wall members 11 is not prevented.

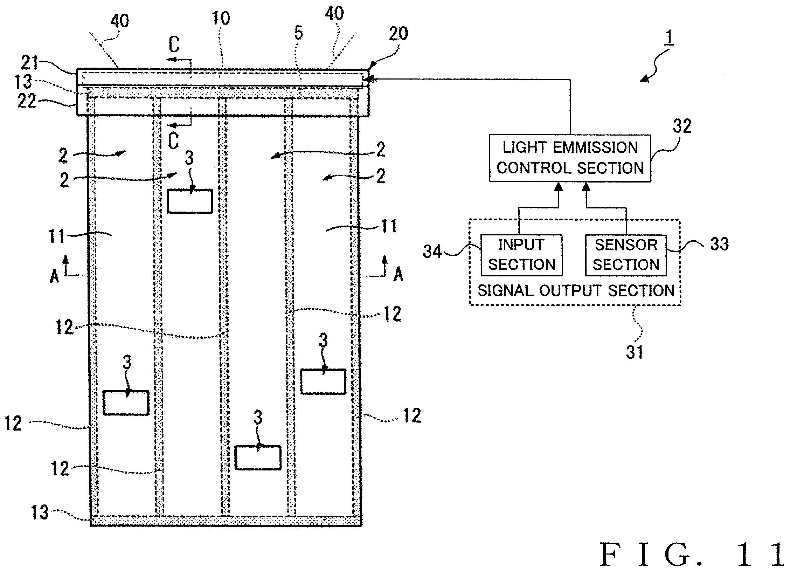

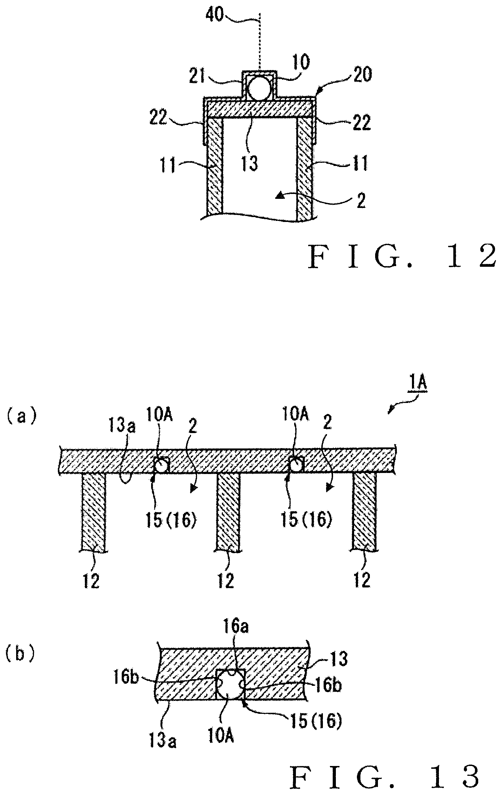

Next, with reference to Figs. 11 to 15, a description will be given about several specific working examples of the acoustic structure 1 provided with a lighting device. In Figs. 11 to 15, the same reference numerals as in Figs. 1 to 5 indicate the same constituent elements as in Figs. 1 to 5, and these same constituent elements will not be described in detail here to avoid unnecessary duplication. Fig. 12 is a sectional view taken along the C - C line of Fig. 11. Note that a sectional view taken along the A - A line of Fig. 11 is substantially the same as Fig. 2 and thus is not shown here.

As shown in Figs. 11 and 12, the instant embodiment of the acoustic structure 1 includes, in addition to the constituent elements pertaining to at least any one of the above-described specific working examples, the lighting device 10 that irradiates light toward the hollow sections 2. Note that, to achieve effective illumination, it is preferable that the wall members 11, 12 and 13, constituting the hollow sections 2, be formed, in their entirety or at least in their parts, of a transparent or translucent material. It is also preferable that, for efficient light irradiation, such transparent or translucent wall members have, on their parts near a light source, shielding layers or reflecting layers formed thereon as appropriate as will be described later.

The lighting device 10 in the instant embodiment may be constructed to emit light of various colors although it may alternatively be constructed to emit mere white light, and it may be constructed to be capable of adjusting the brightness of the light. Further, the lighting device 10 in the instant embodiment is formed in a bar shape and emits light in radial directions generally throughout the length thereof Furthermore, the lighting device 10 in the instant embodiment may be in the form of a bar-shaped light source, such as a fluorescent lamp, or a plurality of dot-shaped light sources, such as LEDs, arranged in the longitudinal direction thereof.

Furthermore, the lighting device 10 is provided on respective one longitudinal end portions (upper end portions in Figs. 11 and 12) of the hollow sections 2, although it may be provided on respective opposite longitudinal end portions of the hollow sections 2. Here, the longitudinal direction of the lighting device 10 corresponds to the arranged direction of the plurality of hollow sections 2 (i.e., corresponds to the Y direction). Thus, the light emitted from the lighting device 10 is irradiated to each of the hollow sections 2 in the longitudinal direction of the hollow section 2 and passes through the interior space of the hollow section 2 in the longitudinal direction.

In the illustrated example of Figs. 11 and 12, the lighting device 10 is placed on the end surface member 13 constituting the upper surface wall of the hollow sections 2, and the end surface member 13 constituting the upper surface wall of the hollow sections 2 is formed of a transparent material. The acoustic structure 1 includes a mounting section 20 that detachably attaches the lighting device 10 to the hollow sections 2. The mounting section 20 includes a retention section 21 that retains the lighting device 10, and a sandwiching section 22 that is provided integrally with the retention section 21 for sandwiching the hollow sections 2. The retention section 21 is formed in a box shape opening in one direction (i.e., downward). The lighting device 10 is accommodated in the retention section 21 in such a manner that it can be freely inserted into and out of the retention section 21. The light is emitted from the lighting device 10 to the outside only through the opening of the retention section 21. The inner surface of the retention section and/or the sandwiching section 22 may be formed as a mirror surface, although the mounting section 20 is not so limited.

The instant embodiment of the acoustic structure 1 further includes a signal output section 31, and a light emission control section 32 that controls a lighting state of the lighting device 10 on the basis of a signal output from the signal output section 31. The signal output section 31 includes a sensor section 33 for detecting an ambient temperature, humidity, light intensity and current time including any one of the seasons of the year, month, date, etc., and an input section 34 operable by a user of the acoustic structure 1 to manually input data of intensity and color of the light to be emitted by the lighting device 10.

The light emission control section 32 varies the intensity and color of the light to be emitted by the lighting device 10 and switches between light-on and light-off (ON/OFF) states of the lighting device 10 on the basis of detection signals output from the sensor section 33 and data signals output from the input section 34. Once the sensor section 33 detects that the ambient light intensity around the acoustic structure 1 is high or that it is now daytime, for example, the light emission control section 32 sets high the light to be emitted by the lighting device 10. Further, once the sensor section 33 detects that the ambient light intensity around the acoustic structure 1 is low or that it is now winter time, for example, the light emission control section 32 sets the light to be emitted by the lighting device 10 at a warm color (e.g., red or orange color).

Further, once the sensor section 33 detects nightfall, for example, the light emission control section 32 lights or turns on the lighting device 10. Once the sensor section 33 detects daybreak, on the other hand, the light emission control section 32 turns off the lighting device 10. Further, once the sensor section 33 detects that it is a flag holiday or a day for a particular event today, for example, the light emission control section 32 repeats turning-on and turning-off of the lighting device 10 (i.e., flashes the lighting device 10) or changes as appropriate time intervals between the turning-on and turning-off of the lighting device 10.

In the case where the acoustic structure 1 constructed in the aforementioned manner is to be installed in a room, such as a conference room, the acoustic structure 1 may, for example, be fixed to the wall surface of the room or placed on the floor surface of the room. Alternatively, the acoustic structure 1 may be hung down from the ceiling of the room via a hanging attachment 40, such as a chain or a chord, as shown in Fig. 11. The hanging attachment 40 is connected to the mounting section 20 in the illustrated example of Fig. 11, although, alternatively, it may be connected for example to any of the wall members of the hollow sections 2.

According to the instant embodiment of the acoustic structure 1, where the hollow sections 2 formed of a transparent material are illuminated with the light emitted by the lighting device 10, the hollow sections 2 can have an enhanced outer appearance and aesthetic design. Additionally, the hollow sections 2 can be shown gorgeously, for example, by the light of the lighting device 10 being refracted from the interfaces (boundary portions) between the wall members of the hollow sections 2 formed at least in part of a transparent or translucent material and the interior spaces of the hollow sections 2 or the exterior space. Further, even where the adhesively attached parts between the wall members (e.g., between the wall members 11 and the connecting wall members 12 and 13), constituting the hollow sections 2, have air bubbles mixed therein, these air bubbles can be made unnoticeable, for example, by the light emitted by the lighting device 10 being refracted and reflected from the interfaces between the adhesively attached parts and the air bubbles. Further, the boundary portions between the members constituting the hollow sections 2 can be made unnoticeable, for example, by the light of the lighting device 10 being refracted from the boundary portions. In the aforementioned manner, it is possible to even further enhance the outer appearance and aesthetic design of the instant embodiment of the acoustic structure 1. Moreover, with the lighting device 10 mounted to the wall members of the hollow section 2 formed of a transparent or translucent material, the acoustic structure 1 can be used also as lighting equipment.

Furthermore, according to the instant embodiment of the acoustic structure 1, where the lighting device 10 is disposed on the respective one longitudinal end portions of the hollow sections 2 so that the light emitted by the lighting device 10 is irradiated to the hollow sections 2 in the longitudinal direction of the hollow sections 2, it is possible to reduce the number of the interfaces between the interior spaces and wall portions of the hollow sections 2 through which the light emitted by the lighting device 10 passes. In this way, the light emitted by the lighting device 10 is allowed to easily pass from the one longitudinal end portion to the other of each of the hollow sections 2, and thus, the light emitted by the lighting device 10 can be used efficiently to illuminate the interior of the room. The same advantageous benefits can also be achieved even in the case where the lighting devices 10 are disposed on the opposite longitudinal end portions of the hollow sections 2.

Furthermore, according to the instant embodiment of the acoustic structure 1, the lighting devices 10 is provided at a position adjoining the respective interior spaces and peripheral walls of the hollow sections 2 in the longitudinal direction of the hollow sections 2. Thus, the light emitted by the lighting device 10 can be irradiated positively to the interior spaces of the hollow sections 2 and the interiors of the peripheral walls of the hollow sections 2. Namely, the interior spaces of the hollow sections 2 and the interiors of the peripheral walls of the hollow sections 2 can be illuminated positively with the light emitted by the lighting device 10.

Further, the instant embodiment of the acoustic structure 1 includes the signal output section 31, and the light emission control section 32 that controls the lighting state of the lighting device 10 on the basis of a signal output from the signal output section 31. Thus, with the instant embodiment of the acoustic structure 1, it is possible to not only illuminate the hollow sections 2 with light of intensity and color suiting environments inside and outside of the room and preference of the user, but also switch between the light-ON and light-OFF states of the lighting device 10. Such arrangements can also alleviate an uncomfortable feeling that would be caused by the acoustic structure 1 being installed in the room.

Moreover, the instant embodiment of the acoustic structure 1 includes the mounting section 20 that detachably attaches the lighting device 10 relative to the hollow sections 2, so that the lighting device 10 can be readily replaced with respect to the hollow sections 2. Furthermore, in the case where the inner surfaces of the retention section 21 and the sandwiching section 22 of the mounting section 20 have mirror surfaces formed thereon in the instant embodiment of the acoustic structure 1, the light emitted by the lighting device 10 can be irradiated positively to the interior spaces of the hollow sections 2 and the interiors of the peripheral walls of the hollow sections 2 in the longitudinal direction of the hollow sections 2.

Moreover, as a modification of the embodiment shown in Figs. 11 and 12, a light shielding layer that does not permit passage therethrough of light or a mirror surface layer that reflects light may be provided on a portion of the inner wall surface of each of the hollow sections 2 in the acoustic structure 1. The light shielding layer prevents transmission of light between the interior space of the hollow section 2 and the peripheral walls. The mirror surface layer reflects light passing in the interior space of the hollow section 2 and reflects light hitting the peripheral walls. In the above-described embodiments of the acoustic structure 1 where the plurality of hollow sections 2 are arranged in a row, such a light shielding layer or a mirror surface layer is formed preferably on each of the side surface members 12 of the peripheral walls, although it may be formed on each of the pair of wall members 11. With such arrangements, the light emitted by the lighting device can be positively irradiated to the interior space of each of the hollow sections 2 and the peripheral walls in the longitudinal direction of the hollow sections 2.

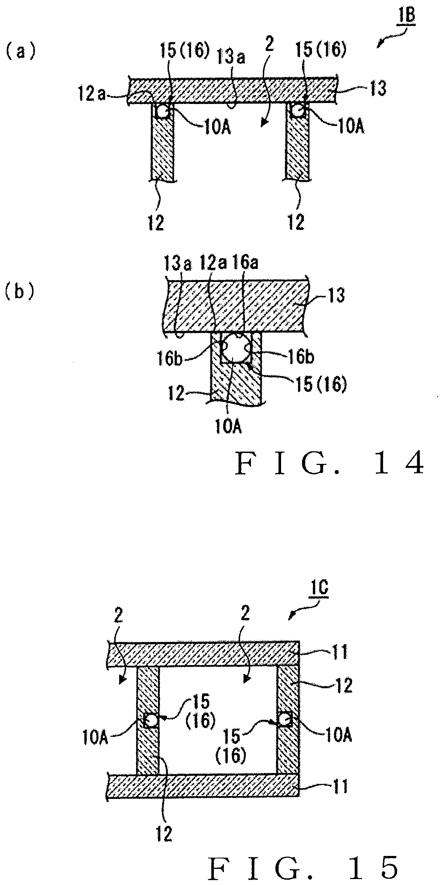

Furthermore, as shown for example in Figs. 13 and 14, a lighting device 10A may be provided in each of accommodating spaces 16 formed in the connecting wall members 12 or 13 constituting the hollow sections 12. In this case, the accommodating space 16 accommodating each of the lighting devices 10A may be in the form of a hollowed portion 15 that is hollowed from the surface of the wall portion connecting wall member 12 or 13 constituting the hollow section 2. In the case where the accommodating space 16 is in the form of such a hollow, the acoustic structure 1 can be manufactured with ease.

In each of the acoustic structures 1A and 1B shown in Figs. 13 and 14, the lighting device 10A and the hollowed portions 15 (accommodating spaces 16) are provided on the respective one longitudinal end portions of the hollow sections 2, as in the above-described embodiments. Note that each of the acoustic structures 1A and 1B shown in Figs. 13 and 14 is provided with a plurality of the lighting devices 10A.

Further, in the acoustic structure 1A shown in Fig. 13, the hollowed portions 15 are formed in the inner surface (surface) 13a of the end surface member 13 constituting the upper surface wall of each of the hollow sections 2. Thus, the light emitted by each of the lighting devices 10A provided in the hollowed portions 15 is irradiated to the interior space of the corresponding hollow section 2 in the longitudinal direction of the hollow section 2.

Alternatively, in the acoustic structure 1A shown in Fig. 13, the hollowed portions 15 may be formed as a single elongated groove extending in the arranged direction of the plurality of hollow sections 2, and the lighting device 10A may be provided in and along such an elongated hollowed portion 15. In this case, the lighting device 10A may be in the form of a bar-shaped light source extending in the arranged direction of the plurality of hollow sections 2, as in the above-described embodiment. As another alternative, the lighting device 10A shown in Fig. 13 may be mounted to the inner surface 13a of the end surface member 13 of the hollow sections 2, with no hollowed portion 15 formed.

In the acoustic structure 1B shown in Fig. 14, on the other hand, the lighting device 10A is provided in each of adhesively attached parts between the side surface members 12 and the end surface member 13, and the side surface members 12 are formed of a transparent material. In this construction, the hollowed portions 15 are formed in the adhesively attached surfaces (surfaces) 12a of the side surface members 12 as illustrated in Fig. 14, although it may be formed in the end surface member 13. In this manner, the light emitted by the lighting device 10A provided in each of the hollowed portions 15 is irradiated through the transparent side surface member 12 to the hollowed portions 15 in the longitudinal direction of the hollowed portions 15.

In the above-described acoustic structures 1A and 1B shown in Figs. 13 and 14, a plurality of the lighting devices 10A are provided so that the light emitted by these lighting devices 10A separately illuminates the respective interior spaces and inner surfaces of the hollow sections 2, i.e. different parts of the plurality of hollow sections 2. The light emitted by these lighting devices 10A can be made different from one another in color and intensity. In this way, it is possible to even further enhance the outer appearance and aesthetic design of the acoustic structures 1A and 1B. The plurality of the lighting devices 10A may be provided, for example, in association with only one of the hollow sections 2, rather than in association with the individual hollow sections 2. In such a case, it just suffices that the plurality of the lighting devices 10A be constructed to illuminate different parts of the one hollow section 2.

Further, in the case where the accommodating space 16 for accommodating the lighting device 10A is provided in the longitudinal end portion of the hollow section 2 as illustratively shown in Figs. 13 and 14, a light shielding layer through which light does not transmit may be provided on a surface portion 16a of the inner surface of the accommodating space 16 that sandwiches the lighting device 10A in conjunction with the wall member 12 extending in the longitudinal direction of the hollow section 2. Further, similar light shielding layers may also be provided on inner side surface portions 16b (inner side surface portions 16b of the hollowed portion 15 in Figs. 12 and 13) of the inner surface that intersect the longitudinal direction of the hollow section 2. Such arrangements can prevent the light emitted by the lighting device 10A from leaking in unnecessary directions (i.e., in directions where the light does not illuminate the hollow sections 2). Namely, the light emitted by the lighting device 10A can be positively irradiated to each of the hollow sections 2 in the longitudinal direction of the hollow section 2.

Furthermore, mirror surface layers that reflect light may be provided on the surface portion 16a of the inner surface of the accommodating space 16 that sandwiches the lighting device 10A in conjunction with the wall member 12 extending in the longitudinal direction of the hollow section 2 and on the inner side surface portions 16b (inner side surface portions 16b of the hollowed portion 15 in Figs. 13 and 14) of the inner surface of the accommodating space 16 that intersect the longitudinal direction of the hollow section 2. With such arrangements, the light emitted by the lighting device 10A can be positively irradiated to each of the hollow sections 2 in the longitudinal direction of the hollow section 2. The aforementioned constructions shown in Figs. 13 and 14 may be combined as appropriate.

As still another alternative, the lighting device 10A may be provided on the side surface member 12 formed of a transparent material, as shown for example in Fig. 15. In this case, the lighting device 10A may, for example, be in the form of a bar-shaped light source extending in the longitudinal direction of the hollow section 2 (i.e., in a direction normal to the sheet of Fig. 15) or a plurality of dot-shaped light sources arranged in the longitudinal direction of the hollow section 2. In this construction, the lighting device 10A is provided on or in the side surface member 12, although it may be provided on or in the wall member 11. More specifically, in the acoustic structure 1C shown in Fig. 15, the lighting device 10A is provided in the accommodating space 16 formed in the side surface member 12, although it may be provided on the surface of the side surface member 12. In such a case, the accommodating space 16 may be in the form of a hollowed portion 15 hollowed inward from the surface of the side surface member 12, and the lighting device 10A may be provided in the hollowed portion 15.

The acoustic structure 1C shown in Fig. 15 achieves the same advantageous benefits as the acoustic structure 1A shown in Fig. 13. Further, according to the acoustic structure 1C shown in Fig. 15, both the interior space of the hollow section 2 and the interior of the wall member12 can be illuminated with the light emitted by the same lighting device 10A.

Further, in the case where two lighting devices 10A are provided on the same side surface member 12, constituting side surface walls of two adjoining hollow sections 2, in the acoustic structure 1C shown in Fig. 15 so as to irradiate light to the respective interior spaces of the two adjoining hollow sections 2, a light shielding layer which does not permit passage or transmission therethrough of light or a mirror surface layer which reflects light may be provided on the inner surface of each of the accommodating spaces 16 (hollowed portions 15). The construction illustratively shown in Fig. 15 may be combined as appropriate with any of the constructions of the above-described embodiments and the constructions illustratively shown in Figs. 13 and 14.

As a further modification, the aforementioned lighting device may be provided, for example, on only one end portion in the arranged direction of the plurality of hollow sections 2 (i.e., on only one end portion in the Y direction). In this modified construction, the light emitted by the lighting device may be irradiated in the arranged direction of the plurality of hollow sections 2 (i.e., in the Y direction) to pass through the plurality of hollow sections 2. For example, the lighting device may be formed in a bar shape extending in the longitudinal direction of the hollow sections 2 as in the above-described embodiment, or a plurality of such lighting devices may be arranged in the longitudinal direction of the hollow sections 2. Such modified constructions too achieve the same advantageous benefits as the above-described embodiments. Further, such lighting devices may be provided both on respective one longitudinal end portions of the hollow sections 2 and on one end portion in the arranged direction of the hollow sections 2. The aforementioned construction may be combined as appropriate with any of the constructions of the above-described embodiments and the constructions illustratively shown in Figs. 13 to 15.

## Claims

1. An acoustic structure comprising:
at least one hollow section defined by a pair of transparent or translucent wall members disposed in opposed relation to each other and a plurality of connecting wall members interconnecting the pair of wall members; and
an opening portion that communicates an interior space of the hollow section to an exterior space.

2. The acoustic structure as claimed in claim 1, wherein at least part of the pair of wall members has colorless or colored transparency or translucence.

3. The acoustic structure as claimed in claim 1 or 2, wherein at least part of the pair of wall members has a portion whose transparent or translucent color tone gradually varies.

4. The acoustic structure as claimed in any one of claims 1 to 3, which has a plurality of the hollow sections arranged in parallel, and a direction in which the pair of wall members are opposed to each other is substantially perpendicular to an arranged direction of the hollow sections.

5. The acoustic structure as claimed in claim 4, wherein at least one of the pair of wall members extends generally flush between at least two adjoining ones of the hollow sections.

6. The acoustic structure as claimed in claim 4, wherein at least one of the pair of wall members has a surface defining a stepped part between at least two adjoining ones of the hollow sections.

7. The acoustic structure as claimed in claim 6, wherein the connecting wall member has colorless or colored transparency or translucence at a portion thereof that interconnects steps of the stepped part between the at least two adjoining ones of the hollow sections.

8. The acoustic structure as claimed in any one of claims 4 to 7, wherein transparency or translucence of the pair of wall members gradually varies in color tone between the hollow sections.

9. The acoustic structure as claimed in any one of claims 1 to 6, wherein at least part of the plurality of connecting wall members has colorless or colored transparency or translucence.

10. The acoustic structure as claimed in any one of claims 1 to 9, wherein at least part of the plurality of connecting wall members has a mirror surface.

11. The acoustic structure as claimed in claim 10, wherein the connecting wall members are adhesively attached at respective end portions thereof to the pair of wall members, and the respective end portions of the connecting wall members adhesively attached to the pair of wall members have the mirror surfaces.

12. The acoustic structure as claimed in claim 10 or 11, wherein a surface of each of the connecting wall members that faces the interior space of the hollow section has the mirror surface.

13. The acoustic structure as claimed in any one of claims 1 to 12, wherein mirror surfaces are formed on portions, outside of wall surfaces of the hollow section defined by the pair of wall members, that overlap respective disposed positions of the connecting wall members interconnecting the pair of wall members.

14. The acoustic structure as claimed in any one of claims 1 to 13, which further comprises a lighting device disposed near an outside or inside of the hollow section.

15. The acoustic structure as claimed in claim 14, wherein the hollow section has an elongated interior space, and the lighting device is constructed to irradiate light to the interior space in a longitudinal direction of the interior space.

16. An acoustic structure comprising:
at least one hollow section defined by a pair of transparent or translucent wall members disposed in opposed relation to each other and a plurality of connecting wall members interconnecting the pair of wall members;
an opening portion that communicates an interior space of the hollow section to an exterior space; and
mirror surfaces provided on such portions, inside and outside of wall surfaces defining the hollow section, that do not prevent linear viewing through the pair of wall members.

17. The acoustic structure as claimed in any one of claims 1 to 16, wherein the opening portion is provided in a wall surface defined by the pair of wall members.
